# EUROPEAN PATENT APPLICATION

(11) **EP 4 371 941 A1**
(43) Date of publication of application: **22.05.2024**
(21) Application number: 22938739.4
(22) Date of filing: 14.10.2022
(51) Int. Cl.: C01F 11/46, C04B 28/14, C04B 28/08

(54) **MANUFACTURING METHOD OF GYPSUM BY USING BIOSULFUR AND OXIDATION REACTION AND USES OF GYPSUM**

(30) Priority: 30.09.2022 KR 20220124824
(71) Applicant: EcoBio Holdings Co., Ltd., Seoul 06609 (KR)
(72) Inventor: SONG, Hyo Soon, Seoul 06601 (KR); KIM, Young Min, Seoul 08098 (KR); CHO, Sung Hyun, Gimpo-si, Gyeonggi-do 10121 (KR); LEE, Pyeong Su, Incheon 22858 (KR); SONG, Myong Shin, Samcheok-si, Gangwon-do 25909 (KR); LEE, Woong Geol, Sokcho-si, Gangwon-do 24847 (KR)
(74) Representative: Ter Meer Steinmeister & Partner
(86) International application number: PCT/KR2022/015544
(87) International publication number: WO 2024/071503

(57) **Abstract**

A method for manufacturing gypsum containing a high content of one or more of hemihydrate gypsum, dihydrate gypsum, and anhydrous gypsum using an oxidation reaction with biosulfur is disclosed herein.

The manufacturing method according to the present invention is environmentally friendly by minimizing the use of sulfuric acid and produces high-quality gypsum containing more than 70% by weight of hemihydrate gypsum, dihydrate gypsum, and/or anhydrous gypsum. In addition, the manufacturing method according to the present invention utilizes biosulfur generated as a by-product of biogas to solve environmental problems and at the same time has the effect of recycling waste resources. The gypsum produced by the manufacturing method of the present invention has a high content of anhydrous gypsum, hemihydrate gypsum, and/or dihydrate gypsum, and does not contain environmental pollutants such as heavy metal ions due to the use of biosulfur. Therefore it can be used as gypsum for gypsum board, aid for grinding blast furnace slag, admixture for cement, gypsum for slag cement, etc.

## Description

### Technical Field

The present invention relates to a method for manufacturing gypsum using an oxidation reaction with biosulfur and uses of the gypsum, and more particularly, to a method for manufacturing gypsum containing a high content of one or more of hemihydrate gypsum, dihydrate gypsum and anhydrous gypsum using an oxidation reaction with biosulfur, and its use.

### Background Art

Gypsum can be broadly divided into natural gypsum, which is naturally produced, and artificially manufactured gypsum. Most natural gypsum is primarily formed through the evaporation of seawater, resulting in the initial precipitation of CaCO₃ as limestone. Subsequently, this precipitate is deposited in layers and transforms into gypsum. In Korea, there is no natural gypsum, so it is imported and used mainly from countries like Thailand.

Gypsum is a sulfate mineral whose main ingredient is calcium sulfate (CaSO4), and exists in the form of anhydrous gypsum (CaSO₄), dihydrate gypsum (CaSO₄ · 2H₂O), and/or hemihydrate gypsum (CaSO₄ · 1/2H₂O).

As a method of artificially manufacturing gypsum, a method of neutralizing waste sulfuric acid generated in various industrial production processes with a calcium compound (lime) and manufacturing gypsum as a by-product is widely known (Korean Patent No. 10-0406392). However, since waste sulfuric acid generated in general industrial production processes contains a lot of fluorine, the gypsum produced by simply neutralization has a high content of fluorine and chemical impurities, making it unsuitable for use as a raw material for cement and gypsum board.

To solve this problem, a method for producing gypsum using sulfuric acid instead of waste sulfuric acid was attempted. However, in order to react stoichiometrically between calcium compounds and sulfuric acid, a large amount of toxic sulfuric acid must be used, so the manufacturing environment is not environmentally friendly and costs a lot of money.

Meanwhile, the cement industry utilizes gypsum as an essential admixture for cement. Gypsum plays a role in delaying the hydration of components that hydrate quickly, such as 3CaO-Al₂O₃, among cement components, and in providing expansion properties to cement. In addition, gypsum is often used as a grinding agent for solidified quenching slag in the process of manufacturing slag cement. The gypsum used in this process facilitates the grinding of the solidified quenching slag, improves the activity of blast furnace ash slag fine powder contained in slag cement, and reduces shrinkage.

Therefore, there is an urgent need to develop a new manufacturing method of gypsum with a high content of hemihydrate gypsum, dihydrate gypsum, and/or anhydrous gypsum while minimizing the amount of sulfuric acid used to avoid the above-mentioned problems of the prior art in the gypsum manufacturing method.

### Detailed Description of the Invention

### Technical Problems

Accordingly, the present inventors continued their research to meet the needs of the prior art, and as a result, confirmed that when gypsum is manufactured under certain conditions using biosulfur and an oxidation reaction, the use of sulfuric acid can be minimized, making it environmentally friendly, and high quality gypsum having a content of more than 70% by weight of hemihydrate gypsum, dihydrate gypsum, and/or anhydrous gypsum can be obtained, thus completing the present invention.

It is therefore an object of the present invention to provide a method for manufacturing gypsum having a content of at least 70 % by weight of hemihydrate gypsum, dihydrate gypsum, and/or anhydrous gypsum in an environmentally friendly manner using biosulfur and an oxidation reaction.

Another object of the present invention is to provide gypsum containing at least 70% by weight of hemihydrate gypsum, dihydrate gypsum, and/or anhydrous gypsum manufactured by the above method.

Another object of the present invention is to provide a composition for a gypsum board comprising said gypsum.

Another object of the present invention is to provide an aid for grinding blast furnace slag comprising said gypsum.

Another object of the present invention is to provide an admixture for cement comprising said gypsum.

Another object of the present invention is to provide a slag cement comprising said gypsum.

Another object of the present invention is to provide a concrete composition comprising said slag cement.

### Technical Solutions

To accomplish the above objects, the present invention provides a method for manufacturing gypsum comprising the steps of:
i) mixing 5 to 30 % by weight of biosulfur, 15 to 40 % by weight of lime, and 30 to 80 % by weight of water, at 90 to 150 °C and at 100 to 300 rpm for 30 minutes to 6 hours;
ii) while stirring the mixture from step i) at 30 rpm or more, performing an oxidation reaction for 30 minutes to 2 hours by adding 50 to 150 parts by weight of a 5-15% sulfuric acid solution to 100 parts by weight of said mixture, while maintaining a pH in the range of 2 to 5; and
iii) drying the reaction product from step ii) at 90 to 120 °C for at least 30 minutes.

In the present invention, "gypsum" means containing at least 70 % by weight, preferably at least 80 % by weight, most preferably at least 85% by weight of one or more selected from the group consisting of hemihydrate gypsum, dihydrate gypsum, and anhydrous gypsum.

As used herein, "biosulfur" refers to an aqueous suspension containing sulfur (S) produced through a biological sulfur conversion process. Compared to chemically produced sulfur, biosulfur is hydrophilic and is a stable aqueous suspension of sulfur with a particle size of 10 µm or less. In addition, biosulfur is virtually non-toxic and can be used without the legislation required for chemically produced sulfur.

In order to utilize biogas or natural gas as a fuel, it goes through a desulfurization process to remove hydrogen sulfide (H₂S) contained in the gas to protect facilities and prevent air pollution. Biosulfur is a by-product produced in the hydrogen sulfide (H2S) treatment process using sulfur-oxidizing microorganisms.

As used herein, "lime" may include limestone, slaked lime, quicklime, waste limestone, limestone sludge, and slaked lime sludge containing at least 40 % by weight of calcium oxide (CaO).

### Step i): CaS compound production step

In this step, 5 to 30 % by weight of biosulfur, 15 to 40 % by weight of lime, and 30 to 80 % by weight of water are mixed at 90 to 150 °C and at 100 to 300 rpm for 30 minutes to 6 hours.

By mixing as described above, the sulfur (S) in biosulfur reacts with Ca in lime to produce CaS (calcium-sulfur) compounds.

In the present invention, biosulfur is used having a sulfur content of at least 40 % by weight, preferably at least 70 % by weight. If the content of sulfur in the biosulfur is less than 40 % by weight, the production of CaS compounds is poor, resulting in a lower yield of gypsum.

In the present invention, it is preferable to use lime containing more than 40% by weight of CaO (calcium oxide). If the calcium oxide component is less than 40% by weight, the production of CaS compounds is not complete, which ultimately lowers the production yield of gypsum, making it uneconomical. Preferably, the calcium oxide component is 45% by weight or more.

In this step, mixing is carried out at a temperature of 90 to 150 °C. If the temperature is less than 90 °C, the sulfur contained in the biosulfur is not dissolved, and if the temperature is above 150 °C, it is not economical. Preferably, the temperature is between 100 and 120 °C.

In the present invention, mixing is performed at 100 to 300 rpm for 30 minutes to 6 hours. If mixing at less than 100 rpm, CaS compounds cannot be sufficiently produced due to the formation of precipitates. If mixing at more than 300 rpm is economically undesirable. Preferably, 150 to 200 rpm is appropriate. If the mixing time is less than 30 minutes, sufficient CaS compounds cannot be produced. Mixing more than 6 hours is economically undesirable. A mixing time of 2 to 5 hours is preferred.

### Step ii): Oxidation reaction step

In this step, while stirring the mixture from step i) at 30 rpm or more, the mixture is subjected to an oxidation reaction for 30 minutes to 2 hours by adding 50 to 150 parts by weight of a 5-15% sulfuric acid solution to 100 parts by weight of said mixture, while maintaining a pH in the range of 2 to 5.

In the above oxidation reaction, the CaS compounds are oxidized by sulfuric acid to produce gypsum containing a large amount of hemihydrate.

In the present invention, it is preferable to use a 5-15% sulfuric acid solution. A sulfuric acid solution concentration of less than 5% results in a less efficient oxidation reaction, and a concentration of more than 15% is undesirable in the manufacturing environment.

In this step, a 5-15% sulfuric acid solution is used in an amount of 50 to 150 parts by weight. If it is less than 50 parts by weight, the oxidation reaction is weak and the production yield of hemihydrate gypsum is low, and if it exceeds 150 parts by weight, it is economically undesirable. Preferably, 80 to 120 parts by weight of the 5-15% sulfuric acid solution is used.

In this step, when a 5-15% sulfuric acid solution is used in the above range, the pH is maintained in the range of 2 to 5. If the pH is less than 2, it may cause a decrease in the production of gypsum (hemihydrate gypsum) due to too strong acidity, and if the pH is more than 5, gypsum cannot be produced. Preferably, the pH is in the range of 3 to 4.

In this step, mixing is performed for 30 minutes to 2 hours. If it is less than 30 minutes, sufficient oxidation reaction does not proceed, which reduces the production of gypsum (hemihydrate gypsum), and if it exceeds 2 hours, it is economically undesirable. Preferably, mixing is performed for 1 hour to 1 hour and 30 minutes.

Meanwhile, by adding 50 to 150 parts by weight of water to 100 parts by weight of the reaction product (hemihydrate gypsum) from step ii) above and mixing for 30 minutes to 2 hours while stirring at 30 rpm or more, gypsum containing a large amount of dihydrate gypsum is produced.

In addition, gypsum containing a large amount of anhydrous gypsum is produced by adding 20 to 100 parts by weight of a 5-15% sulfuric acid solution to 100 parts by weight of the reaction product (hemihydrate gypsum) from step ii) above and mixing for 30 minutes to 2 hours while stirring at 30 rpm or more.

### Step iii): Filtration and drying stage

The reaction product from step ii) is dried at 90 to 120 °C for at least 30 minutes to obtain gypsum.

In this step, drying is carried out at a temperature of 90 to 120 °C for 30 minutes or more. If the temperature is less than 90 °C, the produced gypsum has a lot of moisture and is difficult to use, and if the temperature exceeds 120 °C, it is economically undesirable. Preferably, the drying temperature is 95 to 110 °C, and the drying time is preferably 30 minutes or more.

Optionally, prior to drying the reaction product, the reaction product may be filtered to remove moisture and/or washed with water to remove any remaining sulfuric acid.

Filtration and washing can be performed by conventional methods in gypsum manufacture.

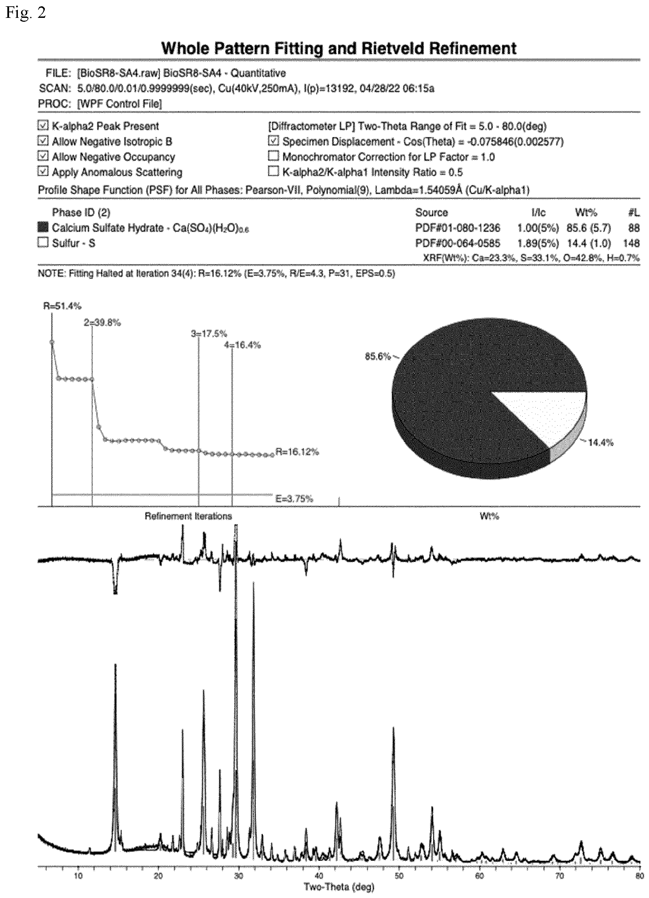

The manufacturing method according to the present invention is environmentally friendly by minimizing the use of sulfuric acid and can produce a high-quality gypsum containing at least 70% by weight of hemihydrate gypsum, dihydrate gypsum, and/or anhydrous gypsum (FIG. 2).

In accordance with another object of the present invention, there is provided gypsum containing at least 70% by weight of hemihydrate gypsum, dihydrate gypsum, and/or anhydrous gypsum manufactured by the above method.

According to another object of the present invention, a composition for a gypsum board comprising said gypsum is provided.

According to another object of the present invention, an aid for grinding blast furnace slag comprising said gypsum. The aid according to the present invention may be used in an amount of about 2 to 3 % by weight of blast furnace slag.

According to another object of the present invention, there is provided an admixture for cement comprising said gypsum. The admixture according to the present invention may be used at about 5 to 8% by weight of cement.

According to another object of the present invention, there is provided a slag cement comprising said gypsum.

According to another object of the present invention, there is provided a concrete composition comprising said slag cement.

### Effects of Invention

The manufacturing method according to the present invention is environmentally friendly by minimizing the use of sulfuric acid and produces high-quality gypsum containing more than 70% by weight of hemihydrate gypsum, dihydrate gypsum, and/or anhydrous gypsum.

In addition, the manufacturing method according to the present invention utilizes biosulfur generated as a by-product of biogas to solve environmental problems and at the same time has the effect of recycling waste resources.

The gypsum produced by the manufacturing method of the present invention has a high content of anhydrous gypsum, hemihydrate gypsum, and/or dihydrate gypsum, and does not contain environmental pollutants such as heavy metal ions due to the use of biosulfur. Therefore it can be used as gypsum for gypsum board, aid for blast furnace slag grinding, admixture for cement, gypsum for slag cement, etc.

In addition, the gypsum according to the present invention is gypsum containing a high content of anhydrous gypsum, hemihydrate gypsum, and/or dihydrate gypsum, so it can be used in a small amount, so it has an excellent economic value-added effect and can replace natural gypsum.

### Description of Drawings

FIG. 1 is a photograph of gypsum manufactured in accordance with the present invention.
FIG. 2 shows the X-ray quantitative analysis results of the gypsum of Example 1.

### Examples of the Invention

Hereinafter, the configuration and effects of the present invention will be described in further detail with reference to exemplary examples to better describe the present invention. However, the following examples are merely exemplified to more clearly describe the present invention, and the scope of the present invention is not limited by the following examples.

### Example 1: Gypsum manufacture using biosulfur and oxidation reaction

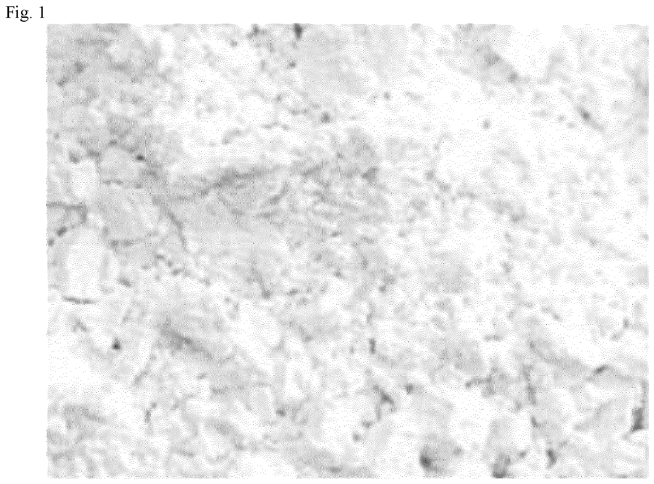

250 g of biosulfur (45% by weight of sulfur; Ecobio Holdings Co., Ltd.), 350g of slaked lime (Back Gwang material Co.) with calcium oxide (CaO) of at least 48% by weight, and 400g of water were mixed at 150 rpm and at a temperature of 110 °C for 4 hours to generate CaS. After the mixing was completed, 800 g of a 10% sulfuric acid solution was slowly added to 1,000 g of the mixture while stirring the mixture at 50 rpm, and the oxidation reaction was allowed to proceed for 60 minutes while maintaining the pH at 3.4. After completion of the reaction, the reaction product was compressively filtered using a filter press to remove moisture, washed with water, and dried at 105 °C for 60 min to obtain gypsum. A photograph of the resulting gypsum is shown in FIG. 1.

### Experimental Example 1: Analysis of Gypsum

The gypsum prepared in Example 1 was analyzed for the amounts of components such as gypsum using an X-ray quantitative component analysis device (Rigaku, D/Max-2500V), and the results are shown in FIG. 2.

As shown in Figure 2, it can be seen that the gypsum manufactured according to the present invention contains 85.6% by weight of hemihydrate gypsum (CaSO₄.1/2H₂O).

## Claims

1. A method for manufacturing gypsum comprising the steps of:
i) mixing 5 to 30 % by weight of biosulfur, 15 to 40 % by weight of lime, and 30 to 80 % by weight of water, at 90 to 150 °C and at 100 to 300 rpm for 30 minutes to 6 hours;
ii) while stirring the mixture from step i) at 30 rpm or more, performing an oxidation reaction for 30 minutes to 2 hours by adding 50 to 150 parts by weight of a 5-15% sulfuric acid solution to 100 parts by weight of said mixture, while maintaining a pH in the range of 2 to 5; and
iii) drying the reaction product from step ii) at 90 to 120 °C for at least 30 minutes,
wherein said biosulfur is a by-product generated during the desulfurization process of removing hydrogen sulfide (H₂S) contained in a gas, and is an aqueous suspension containing at least 40% by weight of sulfur (S).

2. The method for manufacturing gypsum of claim 1, wherein the lime is one or more selected from the group consisting of limestone, slaked lime, quicklime, waste limestone, limestone sludge, and slaked lime sludge containing at least 40 % by weight of calcium oxide (CaO).

3. The method for manufacturing gypsum of claim 1, further comprising, before step iii), adding 50 to 150 parts by weight of water to 100 parts by weight of the reaction product from step ii) and mixing for 30 minutes to 2 hours while stirring at 30 rpm or more.

4. The method for manufacturing gypsum of claim 1, further comprising, before step iii), adding 20 to 100 parts by weight of a 5-15% sulfuric acid solution to 100 parts by weight of the reaction product from step ii) and mixing for 30 minutes to 2 hours while stirring at 30 rpm or more.

5. The method for manufacturing gypsum of any one of claims 1 to 4, wherein said gypsum contains 70% by weight or more of at least one selected from the group consisting of hemihydrate gypsum, dihydrate gypsum, and anhydrous gypsum.

6. Gypsum manufactured according to any one of claims 1 to 4.

7. The gypsum of claim 6, wherein said gypsum comprises contains 70% by weight or more of at least one selected from the group consisting of hemihydrate gypsum, dihydrate gypsum, and anhydrous gypsum.

8. The gypsum of claim 6, wherein said gypsum contains 80% by weight or more of hemihydrate gypsum.

9. A composition for a gypsum board, comprising the gypsum according to claim 6.

10. An aid for grinding blast furnace slag, comprising the gypsum according to claim 6.

11. An admixture for cement, comprising the gypsum according to claim 6.

12. A slag cement, comprising the gypsum according to claim 8.

13. A concrete composition, comprising the slag cement according to claim 12.
